# EUROPÄISCHE PATENTSCHRIFT

(11) **EP 3 399 198 B1**
(45) Veröffentlichungstag und Bekanntmachung des Hinweises auf die Patenterteilung: **28.07.2021**
(21) Anmeldenummer: 18168508.2
(22) Anmeldetag: 20.04.2018
(51) Int. Cl.: F16B 13/00, F16B 23/00

(54) **SCHRAUBDÜBEL**
SCREW DOWEL
CHEVILLE FILETÉE

(30) Priorität: 05.05.2017 DE 102017109660
(43) Veröffentlichungstag der Anmeldung: 07.11.2018
(73) Patentinhaber: fischerwerke GmbH & Co. KG, 72178 Waldachtal (DE)
(72) Erfinder: Dixa, Raphael, 72178 Waldachtal (DE)
(74) Vertreter: Suchy, Ulrich Johannes

(56) Entgegenhaltungen:
- EP-A1- 0 780 585
- EP-A2- 1 298 331

## Beschreibung

Die Erfindung betrifft einen Schraubdübel mit den Merkmalen des Oberbegriffs des Anspruchs 1. Zum Befestigen eines Gegenstands an einem plattenartigen Baustoff, beispielsweise an einer Gipskarton- oder Faserzementplatte, werden gattungsgemäße Schraubdübel in ein Bohrloch in dem Baustoff eingedreht, wobei sich ein Außengewinde des Schraubdübels in den Baustoff einschneidet. Der Schraubdübel hält in dem beim Eindrehen erzeugten Gewindegang und der Gegenstand kann mittels einer handelsüblichen Schraube am Schraubdübel befestigt werden.

Aus der europäischen Patentanmeldung EP 1 298 331 A2 ist ein gattungsgemäßer Schraubdübel bekannt. Am hinteren Ende des bekannten Schraubdübels ist eine Werkzeugaufnahme ausgebildet, die zur Aufnahme von Drehwerkzeugen mit unterschiedlichen Schraubenabtrieben beziehungsweise Klingen mit Schlitz-, Kreuzschlitz- (PH, PZ) oder Innensechsrund-Profil (TX), das auch unter dem Markennamen Torx bekannt ist, geeignet ist. Hierzu weist die Werkzeugaufnahme eine Sechskantprofilierung und Längsrippen als Innenprofilierung auf, die in verschiedenen Abständen voneinander angeordnet sind.

Aus der Patentanmeldung EP 0 780 585 A1 ist ein Schraubdübel mit einer Antriebseinrichtung bekannt, die koaxial zu einem Stern- oder Kreuzloch zusätzlich ein Vielnutloch umfasst.

Aufgabe der Erfindung ist, einen alternativen Schraubdübel zu schaffen, dessen Werkzeugaufnahme Drehwerkzeuge mit Klingen unterschiedlichster Art und Größe aufnehmen kann.

Diese Aufgabe wird erfindungsgemäß durch einen Schraubdübel mit den Merkmalen des Anspruchs 1 gelöst. Der erfindungsgemäße Schraubdübel weist einen Grundkörper und ein Außengewinde auf, das zum Einschrauben des Schraubdübels in einen plattenartigen Baustoff geeignet ist. Mit "plattenartigem Baustoff" ist hier insbesondere eine Bauplatte gemeint, wie sie im Trockenbau eingesetzt wird, also insbesondere eine Gipskarton- oder eine Faserzementplatte. Der plattenartige Baustoff kann aber auch eine Dämmplatte sein, insbesondere eine Dämmplatte aus Polystyrol, wie sie beispielsweise zur Wärmedämmung von Gebäuden verwendet wird. Derartige plattenartige Baustoffe sind im Vergleich zu massiven Baustoffen, wie beispielsweise Beton oder Mauerwerk, relativ weich, sodass der erfindungsgemäße Schraubdübel ein Außengewinde mit relativ großen Gewindeflanken aufweist, wodurch der Schraubdübel auch in diesen relativ weichen Baustoffen ausreichend Halt findet. "Relativ große Gewindeflanken" bedeutet hier, dass der Außendurchmesser des Außengewindes mindestens um den Faktor 1,60, insbesondere um den Faktor 1,65, größer als der Kerndurchmesser des Außengewindes ist. Da die plattenartigen Baustoffe relativ weich sind, können derartige Schraubdübel trotz der relativ großen Gewindeflanken mit einem relativ kleinen Drehmoment in die plattenartigen Baustoffe eingedreht werden, weshalb eine Werkzeugaufnahme des Schraubdübels nicht für ein bestimmtes Schraubenkopf-Mitnahmeprofil optimiert sein muss, da es nicht zwingend notwendig ist, ein möglichst hohes Drehmoment übertragen zu können, wie dies beispielsweise bei Betonschrauben der Fall ist. Das Außengewinde des Schraubdübels ist am Grundkörper angeordnet. Insbesondere bildet der Grundkörper den Kern des Außengewindes. Der Grundkörper erstreckt sich entlang einer Längsachse. Insbesondere weist er über seine Länge oder abschnittsweise die Form eines Zylinders oder eines Kegelstumpfs auf. Der Grundkörper ist insbesondere hülsenartig ausgebildet, insbesondere mit einem Schraubkanal, der sich entlang der Längsachse im Grundkörper erstreckt, so dass eine Schraube in den Grundkörper eingeschraubt und damit ein Gegenstand am Schraubdübel befestigt werden kann. Insbesondere ist am hinteren Ende des Grundkörpers ein umlaufender Bund angeordnet, während am vorderen Ende des Grundkörpers eine Bohrschneide angeordnet sein kann, mit der der Schraubdübel in einem plattenartigen Baustoff, in dem er verankert werden soll, selbstständig ein Bohrloch bohren beziehungsweise schneiden kann. Die Begriffe "hinten" und "vorn" beziehen sich hier auf die Einbringrichtung des Schraubdübels in einen Baustoff. Der Grundkörper weist an seinem hinteren Ende eine Werkzeugaufnahme auf, die Teil eines Schraubkanals sein kann oder in Längsrichtung nach vorn in einen Schraubkanal zur Aufnahme einer Schraube übergehen kann. Die Werkzeugaufnahme dient zur Aufnahme einer Klinge, mit der eine Drehbewegung zum Einschrauben des Schraubdübels in einen Baustoff auf ein Mitnahmeprofil der Werkzeugaufnahme und somit auf den Schraubdübel übertragen werden kann. Die Werkzeugaufnahme ist der Bereich, in den die Klinge planmäßig eingreift. In die Werkzeugaufnahme können Klingen unterschiedlichster Geometrie eingefügt werden, beispielsweise eine Schlitz- oder eine Kreuzschlitzklinge, wobei die Klinge, die bei planmäßigem Gebrauch am tiefsten in die Werkzeugaufnahme eindringt, die Tiefe, also die, vom hinteren Ende des Schraubdübels aus gesehen, axiale Ausdehnung der Werkzeugaufnahme definiert. Um die weitverbreiteten Schlitz- und Kreuzschlitzklingen aufnehmen zu können, weist die Werkzeugaufnahme eine kreuzförmige, aus zwei orthogonal zueinander ausgerichteten Schlitzen gebildete Öffnung auf, die vier, in radialer Richtung verlaufende Eingriffbereiche für die kreuzförmige Klinge bilden. Die Eingriffsbereiche sind, bezogen auf die Längsachse, jeweils um 90° in Umfangsrichtung zueinander versetzt angeordnet. Zwischen den Eingriffbereichen sind in Längsrichtung verlaufende Stege ausgebildet. Weist der Schraubdübel einen Schraubkanal auf, so können die Stege derart ausgestaltet sein, dass eine Schraube, wenn sie in den Schraubkanal eingeschraubt wird, ein Gewinde in die Stege schneidet. Die Werkzeugaufnahme kann Teil des Schraubkanals sein.

Erfindungsgemäß weist zumindest einer, insbesondere jeder der Stege eine nutförmige Vertiefung auf, die mittig zwischen zwei Eingriffbereichen am Steg angeordnet ist. Mit "mittig" ist hier gemeint, dass der Abstand einer Vertiefung zu den beiden benachbarten Eingriffbereichen in Umfangsrichtung gleich ist. Die erfindungsgemäße Ausbildung der nutförmigen Vertiefungen hat den Vorteil, dass die Werkzeugaufnahme zur Aufnahme von Drehwerkzeugen mit unterschiedlichsten Klingen geeignet ist. Eine derart gestaltete Werkzeugaufnahme ist nicht nur zur Aufnahme der bekannten Schlitz- und PZ- und PH-Kreuzschlitzklingen, sondern auch zur Aufnahme von TX-Innensechsrund-Klingen geeignet. Die nutförmigen Vertiefungen sind insbesondere gleichmäßig in der Werkzeugaufnahme verteilt angeordnet. Sie weisen insbesondere gleichen Abstand zur Längsachse auf und sind insbesondere, bezogen auf die Längsachse, um 90° versetzt zueinander angeordnet.

Die nutförmigen Vertiefungen weisen vorzugsweise einen U- oder V-förmigen Querschnitt auf, wobei sich "Querschnitt" hier auf die Form der Vertiefungen in einer Radialebene zur Längsachse bezieht. In eine derartig ausgestaltete Werkzeugaufnahme kann eine Klinge mit PZ-Kreuzschlitz-Geometrie weit entlang der Längsachse in Einbringrichtung und somit tief in die Werkzeugaufnahme eingesteckt werden, sodass der Schraubdübel einen guten Halt auf einem Drehwerkzeug mit PZ-Klinge findet. Die Seitenwände einer U- oder V-förmigen nutförmigen Vertiefung müssen dabei nicht notwendigerweise eben sein. Sie können beispielsweise gekrümmt oder gebogen sein.

Erfindungsgemäß nimmt die Tiefe der nutförmigen Vertiefung zum vorderen Ende des Schraubdübels hin ab, wodurch eine bessere Führung für Werkzeuge unterschiedlich großer Klingen erreicht wird. So finden beispielsweise sowohl ein TX15- als auch ein TX20-Werkzeug in einer Werkzeugaufnahme eines erfindungsgemäßen Schraubdübels einen guten Halt, dessen kreuzförmige Öffnung zur Aufnahme eines PH2-Werkzeugs ausgebildet ist. Die Abnahme der Tiefe kann diskontinuierlich und/oder nur über einen Teil der Längserstreckung der nutförmigen Vertiefung erfolgen, beispielsweise in Treppenform, oder kontinuierlich, wobei der Grund der nutförmigen Vertiefung erfindungsgemäß geneigt zur Längsachse verläuft.

Für eine einfache Herstellung der Werkzeugaufnahme ist der Grund der nutförmigen Vertiefung vorzugsweise über den größten Teil seiner Länge eben, insbesondere gerade. Alternativ kann der Grund der nutförmigen Vertiefung vorzugsweise über den größten Teil seiner Länge zur Längsachse hin gekrümmt sein, wodurch eine größere Variabilität hinsichtlich der aufnehmbaren Größen der unterschiedlichen Klingen erreicht wird.

Weiterhin ist erfindungsgemäß, dass der Neigungswinkel zwischen dem Grund der Vertiefung und der Längsachse 13° bis 20°, insbesondere 14° bis 17°, und insbesondere 15° bis 16° beträgt. Ist der Grund der nutförmigen Vertiefung eben, so ist der Neigungswinkel der vom Grund der nutförmigen Vertiefung und der Längsachse eingeschlossene Winkel. Ist dagegen der Grund der nutförmigen Vertiefung gekrümmt oder weist er eine andere Geometrie auf, so ist der Neigungswinkel der von einer Tangente an den Grund und der Längsachse eingeschlossene Winkel, wobei in diesem Fall der Winkelbereich über mindestens die Hälfte der in Längsrichtung gemessenen Länge der nutartigen Vertiefung eingehalten wird. Eine derartige Ausgestaltung des erfindungsgemäßen Schraubdübels hat sich als besonders vorteilhaft im Hinblick auf die Verwendung von Schraubenantrieben unterschiedlicher Größe in einer Werkzeugaufnahme, zum Beispiel zur Aufnahme von TX15- oder TX20-Klingen, erwiesen. Von Vorteil ist hierfür ebenfalls, wenn die Weite der nutförmigen Vertiefung zum vorderen Ende des Schraubdübels hin abnimmt, wie dies bei einer weiteren bevorzugten Ausgestaltungsform des erfindungsgemäßen Schraubdübels der Fall ist. Als "Weite" wird jeweils die größte Abmessung tangential zur Längsachse in einer Radialebene zur Längsachse verstanden.

Damit Kreuzschlitz-Klingen einen guten Sitz und eine gute Führung in der Werkzeugaufnahme des erfindungsgemäßen Schraubdübels haben, ist bei einer bevorzugten Ausgestaltungsform des erfindungsgemäßen Schraubdübels in einem hinteren Teil der Werkzeugaufnahme die Längsachse parallel zur Außenwand eines Eingriffbereichs. Die "Außenwand" ist diejenige Fläche des Eingriffbereichs, die den größten radialen Abstand zur Längsachse aufweist. Damit kann eine Kreuzschlitz-Klinge relativ tief in die Werkzeugaufnahme eingeführt werden was dem Schraubdübel einen sehr guten Halt auf einem Drehwerkzeug mit Kreuzschlitz-Klinge gibt.

Zudem können die Seitenwände des Eingriffbereichs, die einen Eingriffbereich in einem vorderen Teil der Werkzeugaufnahme begrenzen, vorzugsweise derart gestaltet sein, dass der Abstand der Seitenwände zum vorderen Ende des Schraubdübels hin abnimmt.

Mit dem "vorderem Teil" der Werkzeugaufnahme ist hier zumindest das vordere Viertel der Werkzeugaufnahme gemeint, und mit dem "hinteren Teil" der Werkzeugaufnahme das hintere Viertel.

Die Erfindung wird nachfolgend anhand von zwei in der Zeichnung dargestellten Ausführungsbeispielen näher erläutert.

Es zeigen:
- Figur 1: einen ersten erfindungsgemäßen Schraubdübel in einer Seitenansicht;
- Figur 2: den ersten erfindungsgemäßen Schraubdübel in einer Draufsicht;
- Figuren 3 bis 5: den hinteren Teil des ersten erfindungsgemäßen Schraubdübels in verschiedenen Schnittdarstellungen; und
- Figur 6: den hinteren Teil eines zweiten erfindungsgemäßen Schraubdübels in einer Schnittdarstellung.

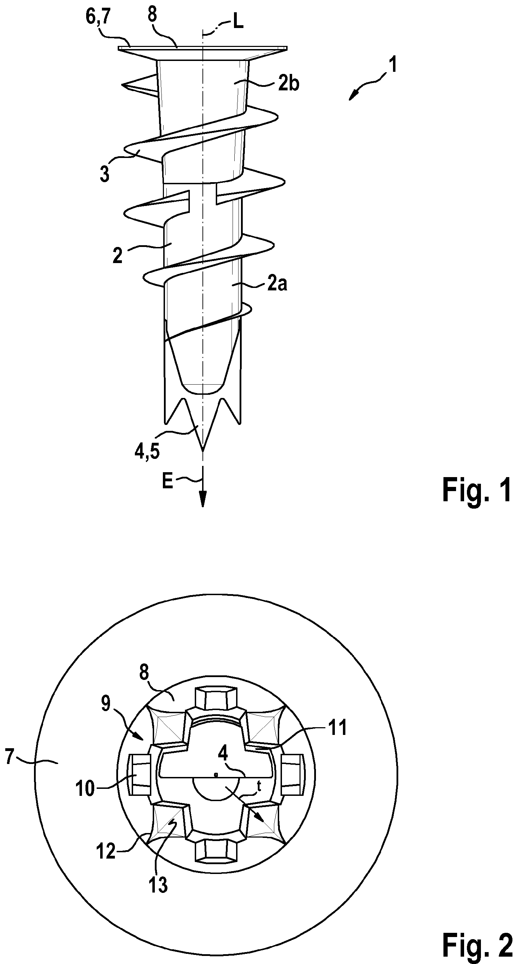

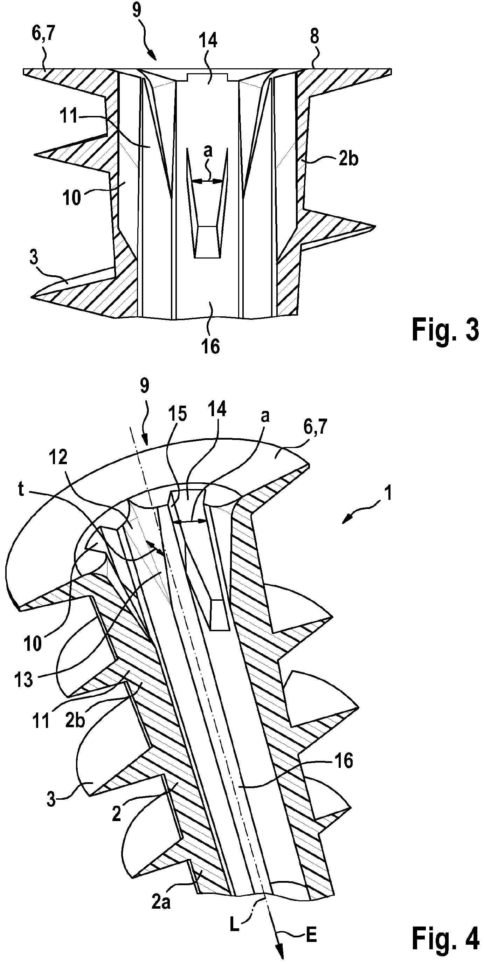

In den Figuren 1 bis 5 ist ein erster erfindungsgemäßer Schraubdübel 1 dargestellt. Der Schraubdübel 1 umfasst einen Grundkörper 2, der sich entlang einer Längsachse L erstreckt. Der Grundkörper 2 ist in einem vorderen Abschnitt 2a im Wesentlichen als Hohlzylinder ausgebildet, während er in einem hinteren Abschnitt 2b eine konische Mantelfläche aufweist. "Vorn" und "hinten" beziehen sich hier und im Folgenden auf die Einbringrichtung E des Schraubdübels 1 in einen Baustoff, beispielsweise in eine Gipskartonplatte. Am Grundkörper 2 ist ein Außengewinde 3 zum Einschrauben des Schraubdübels 1 in einen plattenartigen Baustoff (nicht dargestellt) angeordnet. Im dargestellten Ausführungsbeispiel ist das Außengewinde 3 zum Einschrauben in eine Gipskartonplatte optimiert. Es weist daher am Übergang vom vorderen Abschnitt 2a zum hinteren Abschnitt 2b einen maximalen Außendurchmesser auf, der um den Faktor 1,7 größer als der Durchmesser des Grundkörpers 2 in einem korrespondierenden Querschnitt ist, sodass das Außengewinde 3 ohne großen Kraftaufwand beim Einschrauben in eine Gipskartonplatte einen Gewindegang in die Gipskartonplatte schneiden kann und hohe Haltekräfte in der Gipskartonplatte erreicht werden. In Einbringrichtung E vor dem vorderen Abschnitt 2a des Grundkörpers 2 ist eine Bohrschneide 4 angeordnet, mit der der Schraubdübel 1 beim Einschrauben in eine Gipskartonplatte ein Bohrloch zur Aufnahme des Grundkörpers 2 einschneiden kann. Die Bohrschneide 4 bildet das vordere Ende 5 des Schraubdübels 1. Als hinteres Ende 6 des Schraubdübels 1 ist am Grundkörper 2 ein umlaufender Bund 7 angeordnet, der nach dem planmäßigen Eindrehen des Schraubdübels 1 in eine Gipskartonplatte an der Gipskartonplatte anliegt und ein zu tiefes Eindrehen des Schraubdübels 1 in den Baustoff verhindert.

Der Grundkörper 2 ist innen hohl als Hülse ausgebildet, wobei er an seinem hinteren Ende 8 eine Werkzeugaufnahme 9 aufweist. Die Werkzeugaufnahme 9 dient zur Aufnahme einer Klinge eines Drehwerkzeugs (nicht dargestellt), beispielsweise eines Schraubendrehers oder eines Bits eines Akkuschraubers, mit dem zum Einschrauben eine Drehbewegung um die Längsachse L auf den Schraubdübel 1 übertragen wird. Die Werkzeugaufnahme 9 weist eine kreuzförmige Öffnung auf, durch die vier Eingriffbereiche 10, mit Außenwänden 14 und Seitenwänden 15, für die kreuzförmige Klinge mit PH-Profil eines Drehwerkzeugs ausgebildet sind. Die Eingriffbereiche 10 sind bezüglich der Längsachse L um 90° in Umfangsrichtung zueinander versetzt. Zwischen den Eingriffbereichen 10 sind in Längsrichtung verlaufende Stege 11 ausgebildet, die sich im Wesentlichen über die gesamte Länge des hohlen Grundkörpers 2 erstrecken und einen Schraubkanal 16 zum Einschrauben einer Schraube bilden, der bis zur Bohrschneide 4 reicht. Wird eine Schraube (nicht dargestellt) zum Befestigen eines Gegenstands am Schraubdübel 1 in den Schraubkanal 16 eingeschraubt, so schneidet sich das Gewinde der Schraube in die Stege 11 ein, wodurch die Schraube einen festen Halt am Schraubdübel 1 findet.

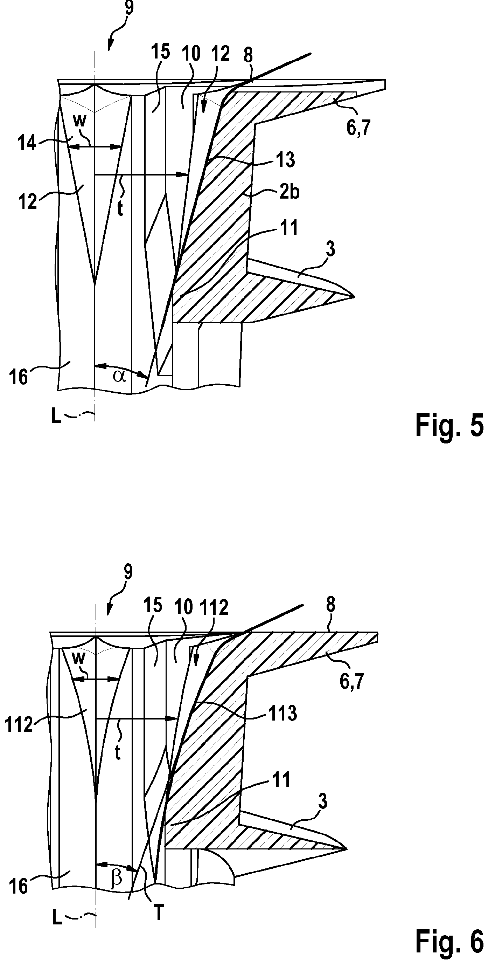

Damit die Werkzeugaufnahme 9 Drehwerkzeuge mit verschiedenen Klingengeometrien, beispielsweise Schlitz-, Kreuzschlitz- oder Innensechsrund-Klingen, und unterschiedlichen Klingengrößen, beispielsweise PH1 oder PH2 und/oder TX15 oder TX20 aufnehmen kann und dennoch eine Übertragung einer Drehbewegung mit einem Drehmoment möglich ist, das zum Einschneiden des Schraubdübels 1 in eine Gipskartonplatte ausreicht, weist jeder der Stege 11 eine nutförmige Vertiefung 12 auf, die mittig zwischen den, dem jeweiligen Steg 11 in Umfangsrichtung benachbarten Eingriffbereichen 10 angeordnet ist. Die nutförmige Vertiefung 12 weist einen V-förmigen Querschnitt auf mit einem Grund 13, der, aufgrund der mittigen Anordnung der Vertiefung 12 den jeweils gleichen Abstand von den ihm in Umfangsrichtung benachbarten Eingriffbereichen 10 aufweist. Die in radialer Richtung gemessene Tiefe t der nutförmigen Vertiefung 12 nimmt zum vorderen Ende 5 des Schraubdübels 1 hin ab, da der Grund 13 der Vertiefung 12 zur Längsachse L geneigt ist. Der Grund 13 der nutförmigen Vertiefung 12 verläuft über den größten Teil seiner Länge eben als Gerade, wie dies insbesondere in Figur 5 zu sehen ist. Der Neigungswinkel α zwischen dem Grund 13 und der Längsachse L beträgt 15°. Eine alternative Ausgestaltung der Werkzeugaufnahme 9 zeigt Figur 6, bei der der Grund 113 der nutförmigen Vertiefung 112 über den größten Teil seiner Länge zur Längsachse L hin konvex in den Hohlraum der Werkzeugaufnahme 9 hinein gebogen ist. Der Neigungswinkel β, der von einer Tangente T, die ungefähr auf der halben Länge des Grunds 113 an den Grund 113 angelegt ist, und der Längsachse L eingeschlossen wird, beträgt ebenfalls 15°. Sowohl bei der Vertiefung 12, wie sie in den Figuren 2 bis 5 zu sehen ist, als auch bei der Vertiefung 112, die in Figur 6 dargestellt ist, nimmt die tangential zur Längsachse L gemessene Weite w der Vertiefungen 12, 112 zum vorderen Ende 5 des Schraubdübels 1 hin ab. Dies sorgt für einen guten Sitz und einen festen Halt einer Klinge eines Drehwerkzeugs mit Schlitz-, Kreutzschlitz- oder Innensechsrund-Klinge in der Werkzeugaufnahme 9.

Bei beiden in den Figuren dargestellten Ausführungsformen der Werkzeugaufnahme 9 verläuft in einem hinteren Teil der Werkzeugaufnahme 9 die Außenwand 14 parallel zur Längsachse L und der Abstand a zwischen den Seitenwänden 15 des Eingriffbereichs 10 nimmt in einem vorderen Teil der Werkzeugaufnahme 9 zum vorderen Ende 5 des Schraubdübels 1 hin ab. Aufgrund dieser Ausgestaltung finden Kreuzschlitz-Klingen einen guten Sitz und einen guten Halt in der Werkzeugaufnahme 9.

### Bezugszeichenliste

- 1: Schraubdübel
- 2: Grundkörper
- 2a: vorderer Abschnitt des Grundkörpers 2
- 2b: hinterer Abschnitt des Grundkörpers 2
- 3: Außengewinde
- 4: Bohrschneide
- 5: vorderes Ende des Schraubdübels 1
- 6: hinteres Ende des Schraubdübels 1
- 7: Bund
- 8: hinteres Ende des Grundkörpers 2
- 9: Werkzeugaufnahme
- 10: Eingriffbereich
- 11: Steg
- 12, 112: nutförmige Vertiefung
- 13, 113: Grund der nutförmigen Vertiefung 12, 112
- 14: Außenwand des Eingriffbereichs 10
- 15: Seitenwand des Eingriffbereichs 10
- 16: Schraubkanal
- a: Abstand der Seitenwände 15
- E: Einbringrichtung
- L: Längsachse
- t: Tiefe der nutförmigen Vertiefung 12, 112
- T: Tangente
- w: Weite der nutförmigen Vertiefung 12, 112
- α, β: Neigungswinkel des Grunds 13, 113 der nutförmigen Vertiefung 12, 112

## Patentansprüche

1. Schraubdübel (1) mit einem Außengewinde (3) zum Einschrauben des Schraubdübels (1) in einen plattenartigen Baustoff, mit einem Grundkörper (2), der sich entlang einer Längsachse (L) erstreckt und an dem das Außengewinde (3) angeordnet ist, wobei der Grundkörper (2) an seinem hinteren Ende (8) eine Werkzeugaufnahme (9) mit einer kreuzförmigen Öffnung aufweist, die vier Eingriffbereiche (10) für eine kreuzförmige Klinge eines Drehwerkzeugs bildet, wobei zwischen den Eingriffbereichen (10) in Längsrichtung verlaufende Stege (11) ausgebildet sind, wobei zumindest einer der Stege (11) eine nutförmige Vertiefung (12, 112) aufweist, die mittig zwischen zwei Eingriffbereichen (10) am Steg (11) angeordnet ist, wobei die Tiefe (t) der nutförmigen Vertiefung (12, 112) zum vorderen Ende des Schraubdübels (5) hin abnimmt, wobei der Grund (13, 113) der nutförmigen Vertiefung (12, 112) geneigt zur Längsachse (L) verläuft, **dadurch gekennzeichnet, dass** der Neigungswinkel (α, β) zwischen dem Grund (13, 113) der nutförmigen Vertiefung (12, 112) und der Längsachse (L) 13° bis 20° beträgt.

2. Schraubdübel nach Anspruch 1, **dadurch gekennzeichnet, dass** die nutförmige Vertiefung (12, 112) einen U- oder V-förmigen Querschnitt aufweist.

3. Schraubdübel nach Anspruch 1 oder 2, **dadurch gekennzeichnet, dass** der Grund (13) der nutförmigen Vertiefung (12) über den größten Teil seiner Länge eben, insbesondere gerade ist.

4. Schraubdübel nach Anspruch 1 oder 2, **dadurch gekennzeichnet, dass** der Grund (113) der nutförmigen Vertiefung (112) über den größten Teil seiner Länge zur Längsachse (L) hin gekrümmt ist.

5. Schraubdübel nach einem der Ansprüche 1 bis 4, **dadurch gekennzeichnet, dass** der Neigungswinkel (α, β) zwischen dem Grund (13, 113) der nutförmigen Vertiefung (12, 112) und der Längsachse (L) 14° bis 17°, insbesondere 15° bis 16° beträgt.

6. Schraubdübel nach einem der Ansprüche 1 bis 5, **dadurch gekennzeichnet, dass** die Weite (w) der nutförmigen Vertiefung (12, 112) zum vorderen Ende des Schraubdübels (5) hin abnimmt.

7. Schraubdübel nach einem der Ansprüche 1 bis 6, **dadurch gekennzeichnet, dass** die Längsachse (L) parallel zu einer Außenwand (14) eines Eingriffbereichs (10) in einem hinteren Teil der Werkzeugaufnahme (9) ist.

8. Schraubdübel nach einem der Ansprüche 1 bis 7, **dadurch gekennzeichnet, dass** der Abstand (a) von Seitenwänden (15), die einen Eingriffbereich (10) in einem vorderen Teil der Werkzeugaufnahme (9) in Umfangsrichtung begrenzen, zum vorderen Ende (5) des Schraubdübels (1) hin abnimmt.

## Claims

1. Screw-in fixing plug (1) having an external thread (3) for screwing the screw-in fixing plug (1) into a board-like material, having a main body (2) which extends along a longitudinal axis (L) and on which the external thread (3) is arranged, the main body (2) having at its rear end (8) a tool receiver (9) having a cross-shaped opening which forms four engagement regions (10) for a cross-shaped blade of a rotary tool, wherein longitudinally extending ribs (11) are formed between the engagement regions (10), at least one of the ribs (11) having a groove-like recess (12, 112) which is arranged centrally on the rib (11) between two engagement regions (10), the depth (t) of the groove-like recess (12, 112) decreasing towards the front end (5) of the screw-in fixing plug, wherein the base (13, 113) of the groove-like recess (12, 112) runs at an angle to the longitudinal axis (L), **characterised in that** the angle of inclination (α, β) between the base (13, 113) of the groove-like recess (12, 112) and the longitudinal axis (L) is from 13° to 20°.

2. Screw-in fixing plug according to claim 1, **characterised in that** the groove-like recess (12, 112) has a U-shaped or V-shaped cross-section.

3. Screw-in fixing plug according to claim 1 or 2, **characterised in that** the base (13) of the groove-like recess (12) is flat, especially straight, over most of its length.

4. Screw-in fixing plug according to claim 1 or 2, **characterised in that** the base (113) of the groove-like recess (112) is curved towards the longitudinal axis (L) over most of its length.

5. Screw-in fixing plug according to any one of claims 1 to 4, **characterised in that** the angle of inclination (α, β) between the base (13, 113) of the groove-like recess (12, 112) and the longitudinal axis (L) is from 14° to 17°, especially from 15° to 16°.

6. Screw-in fixing plug according to any one of claims 1 to 5, **characterised in that** the width (w) of the groove-like recess (12, 112) decreases towards the front end (5) of the screw-in fixing plug.

7. Screw-in fixing plug according to any one of claims 1 to 6, **characterised in that** the longitudinal axis (L) is parallel to an outer wall (14) of an engagement region (10) in a rear portion of the tool receiver (9).

8. Screw-in fixing plug according to any one of claims 1 to 7, **characterised in that** the spacing (a) between side walls (15) that define an engagement region (10) in a front portion of the tool receiver (9) in the circumferential direction decreases towards the front end (5) of the screw-in fixing plug (1).

## Revendications

1. Cheville vissable (1) comprenant un filetage extérieur (3) dévolu au vissage de ladite cheville vissable (1) dans un matériau de construction du type plaque, et un corps de base (2) qui s'étend le long d'un axe longitudinal (L) et sur lequel ledit filetage extérieur (3) est disposé, sachant que ledit corps de base (2) est muni, à son extrémité postérieure (8), d'un logement d'outil (9) pourvu d'une ouverture cruciforme qui constitue quatre zones d'engagement (10) dédiées à une lame cruciforme d'un outil tournant, sachant que des membrures (11) s'étendant dans la direction longitudinale sont ménagées entre lesdites zones d'engagement (10), au moins l'une desdites membrures (11) présentant un renfoncement (12, 112) en forme de rainure qui occupe, sur ladite membrure (11), un emplacement central entre deux zones d'engagement (10), la profondeur (t) du renfoncement (12, 112), en forme de rainure, décroissant en direction de l'extrémité antérieure (5) de la cheville vissable, le fond (13, 113) dudit renfoncement (12, 112) en forme de rainure s'étendant avec inclinaison par rapport à l'axe longitudinal (L), **caractérisée par le fait que** l'angle d'inclinaison (α, β), entre l'axe longitudinal (L) et le fond (13, 113) du renfoncement (12, 112) en forme de rainure, mesure de 13° à 20°.

2. Cheville vissable selon la revendication 1, **caractérisée par le fait que** le renfoncement (12, 112), en forme de rainure, présente une section transversale configurée en U ou en V.

3. Cheville vissable selon la revendication 1 ou 2, **caractérisée par le fait que** le fond (13) du renfoncement (12) en forme de rainure est plan, notamment rectiligne sur la majeure partie de sa longueur.

4. Cheville vissable selon la revendication 1 ou 2, **caractérisée par le fait que** le fond (113) du renfoncement (112) en forme de rainure est courbe, en direction de l'axe longitudinal (L), sur la majeure partie de sa longueur.

5. Cheville vissable selon l'une des revendications 1 à 4, **caractérisée par le fait que** l'angle d'inclinaison (α, β) mesure de 14° à 17°, notamment de 15° à 16°, entre l'axe longitudinal (L) et le fond (13, 113) du renfoncement (12, 112) en forme de rainure.

6. Cheville vissable selon l'une des revendications 1 à 5, **caractérisée par le fait que** la largeur (w) du renfoncement (12, 112), en forme de rainure, décroît en direction de l'extrémité antérieure (5) de ladite cheville vissable.

7. Cheville vissable selon l'une des revendications 1 à 6, **caractérisée par le fait que**, dans une partie postérieure du logement d'outil (9), l'axe longitudinal (L) est parallèle à une paroi extérieure (14) d'une zone d'engagement (10).

8. Cheville vissable selon l'une des revendications 1 à 7, **caractérisée par le fait que**, dans une partie antérieure du logement d'outil (9), l'espacement (a) entre des parois latérales (15) délimitant une zone d'engagement (10), dans la direction périphérique, décroît en direction de l'extrémité antérieure (5) de ladite cheville vissable (1).
